# EUROPEAN PATENT APPLICATION

(11) **EP 3 336 717 A1**
(43) Date of publication of application: **20.06.2018**
(21) Application number: 16203937.4
(22) Date of filing: 14.12.2016
(51) Int. Cl.: G06F 17/30

(54) **SYSTEM, DEVICE AND METHOD FOR DATA UPDATE NOTIFICATION**

(71) Applicant: Huawei Technologies Co., Ltd., Longgang District Shenzhen, Guangdong 518129 (CN)
(72) Inventor: MARTINEZ, Norbert, 80992 München (DE); DOMINGUEZ, David, 80992 München (DE)
(74) Representative: Kreuz, Georg Maria

(57) **Abstract**

A system, comprising a first client, a second client and a server, wherein the first client is configured to send a first update instruction to the server; the server is configured to transform the first update instruction into a second update instruction on the basis of catalog information, and notify the second update instruction to the second client, wherein the second update instruction indicates a set of partial update operations, which are associated to second data stored by the second client using a second schema; and the second client is configured to apply the second update instruction to the stored second data. In this manner, the second client and the first client can keep consistent data in the second schema and the first schema respectively.

## Description

### FIELD OF THE INVENTION

The present invention relates to the field of database management technologies, and in particular, to system, server and a data update notification method.

### BACKGROUND

A database management system (DBMS) may include at least one server (herein also referred to as publisher) and multiple clients (herein also referred to as subscribers), and at least one database that stores collections of objects and allows read and write operations to the objects. A database schema may be used to describe one or more fields allowed for each object type. The database may associate a separate schema to each client. In other words, some clients may run with different schema versions.

Schema evolution is a functionality of databases that for a given object type allows the schema to be changed to a new version. Objects stored in the database according to a given schema version, may be read using an older or newer schema version. If the object is read with a newer schema version, we call this upgrade schema evolution. If the object is read with an older schema, we call this downgrade schema evolution.

After one or more objects of the database are changed or modified, the problem addressed is how to notify one or more clients using different schema versions of any changes in the system so that the clients and the server can keep consistent copies of the same data objects even according to different schema versions.

An attempt to address this problem is called "Upward and downward compatible schema evolution" (US2006004781A1), which is a proposal for schema evolution for both upward and downward-compatibility in object and data models. The procedure is to perform upward and downward schema evolution of the full/whole object, and to notify the whole or full data object modified for different schema versions to multiple clients in inefficiency way. However, there is still a need for an efficient notification scheme for different schema versions when dealing with notifications of partial changes or updates.

### SUMMARY

Accordingly, an object of the present invention is to provide a system, a server and data update notification method, which notifies partial updates to one or more clients using different schema versions in an efficient way during on-going schema evolution.

The above-mentioned object of the present invention is achieved by the solution provided in the independent claims. Further, implementations are defined in the dependent claims.

A first aspect of the present invention provides a server for use in a database management system, including:
- a communication module, configured to receive a first update instruction from a first client which uses a first schema, wherein the first update instruction indicates a set of partial update operations, the partial update operations being associated to first data stored by the first client using the first schema;
- a transformation module, configured to transform the first update instruction into a second update instruction on the basis of catalog information, wherein the second update instruction indicates a set of partial update operations, the partial update operations being associated to second data stored by a second client using a second schema; and
- wherein the communication module is further configured to notify the second update instruction to the second client, so that the second client can apply the second update instruction to the stored second data.

Therefore, the server of the first aspect is efficient in terms of the performance and network usage consumption. This is achieved because when dealing with notifications of partial updates, only a set of partial update operations modified for different schema versions is notified by the server, instead of notifying the whole/full data object modified for different schema versions. In addition, this is also achieved because schema evolution or transformation is performed on the set of partial update operations, instead of the whole/full data object, by the server.

In a first possible implementation form of the server according to the first aspect as such, the first update instruction comprises:
- a client information for identifying the first client or schema version information which indicates the first schema used by the first client, and
- the set of partial update operations, which are associated to the first data using the first schema;

The second update instruction comprises:
- a client information for identifying the second client or schema version information which indicates the second schema used by the second client, and
- the set of partial update operations, which are associated to the second data using the second schema.

Thus, the server of the first implementation provides a flexible way of carrying information that indicates the schema used by the first (source or sending) or second (target or receiving) client directly or indirectly.

In a second possible implementation form of the server according to the first aspect as such or the first implementation form thereof, the catalog information comprises a plurality of schemas of one or more clients, and wherein the transformation module is configured to:
- generate a transformation rule from the first schema to the second schema on the basis of the first schema and the second schema included in the catalog information; and
- obtain the second update instruction by applying the generated transformation rule to the set of partial update operations indicated by the first update instruction.

Thus, the server of the second implementation provides a particularly efficient way of on-going schema evolution (i.e. transformation) from the first update instruction expressed in the first schema into the second update instruction expressed in the second schema. In particular, an efficient way of on-going schema evolution (i.e. transformation) from a set of partial update operations, which are associated to data using the first schema in the first client into a set of partial update operations, which are associated to data using the second schema in the second client.

In a third implementation of the device according to any of the preceding implementation forms of the first aspect, the transformation module is further configured to:
- identify the first schema on the basis of the schema version information included in the first update instruction or on the basis of the client information included in the first update instruction and a mapping between the client information and the schema version information.

Thus, the server of the third implementation provides a flexible way of identifying the schema used by the first (sending) client directly or indirectly.

According to a second aspect the invention relates to a data update notification method for notifying updates in a database management system, the method performed by a server. The method comprises the steps of:
- receiving a first update instruction from a first client which uses a first schema, wherein the first update instruction indicates a set of partial update operations, the partial update operations being associated to first data stored by the first client using the first schema;
- transforming the first update instruction into a second update instruction on the basis of catalog information, wherein the second update instruction indicates a set of partial update operations, the partial update operations being associated to second data stored by a second client using a second schema; and
- notifying the second update instruction to the second client, so that the second client can apply the second update instruction to the stored second data.

Thus, the method of the second aspect is efficient in terms of the performance and network usage consumption. This is achieved because when dealing with notifications of partial updates, only a set of partial update operations modified for different schema versions is notified, instead of notifying the whole/full data object modified for different schema versions. In addition, this is also achieved because schema evolution is performed on the set of partial update operations, instead of the whole/full data object.

In a first possible implementation form of the method according to the second aspect as such, the first update instruction includes:
- a client information for identifying the first client or schema version information which indicates the first schema used by the first client, and
- the set of partial update operations, which are associated to the first data using the first schema;
the second update instruction includes:
- a client information for identifying the second client or schema version information which indicates the second schema used by the second client, and
- the set of partial update operations, which are associated to the second data using the second schema.

Thus, the method of the first implementation provides a flexible way of carrying information indicates the schema used by the first (sending) or second (receiving) client directly or indirectly.

In a second possible implementation form of the method according to the second aspect as such or the first implementation form thereof, the step of transforming the first update instruction defined in the first schema into a second update instruction defined in a second schema on the basis of catalog information comprises:
- generating a transformation rule from the first schema to the second schema on the basis of
   - the first schema and the second schema included in the catalog information;
- obtaining the second update instruction by applying the generated transformation rule to the set of partial update operations indicated by the first update instruction.

Thus, the method of the second implementation provides a particularly efficient way of on-going schema evolution (i.e. transformation) from the first update instruction expressed in the first schema into the second update instruction expressed in the second schema. In particular, a particularly efficient way of on-going schema evolution (i.e. transformation) from a set of partial update operations, which are associated to data using the first schema in the first client into a set of partial update operations, which are associated to data using the second schema in the second client.

In a third possible implementation form of the method according to the first or second implementation form thereof, the method further comprises:
- identifying the first schema on the basis of the schema version information included in the first update instruction or on the basis of the client information included in the first update instruction and a mapping between the client information and the schema version.

Thus, the method of the third implementation provides a flexible way of identifying the schema used by the first (sending) client directly or indirectly.

The method of the present invention achieves the same advantages as described above for the device. The method may be carried out with additional method steps, which correspond to the functions carried out by the various implementation forms described above for the device.

According to a third aspect the invention relates to a database management system. The system comprises: a first client, a second client and a server, wherein:
the first client is configured to send a first update instruction to the server, wherein the first update instruction indicates a set of partial update operations, which are associated to first data stored by the first client using the first schema;
the server is configured to transform the received first update instruction into a second update instruction on the basis of catalog information, and notify the second update instruction to the second client, wherein the second update instruction indicates a set of partial update operations, which are associated to second data stored by the second client using a second schema; and
the second client is configured to apply the second update instruction to the stored second data. In this manner the second client and the first client can keep consistent data in the second schema and the first schema respectively.

Therefore, the system of the third aspect is efficient in terms of the performance and network usage consumption. This is achieved because when dealing with notifications of partial updates, a second update instruction corresponding to a second schema different from the first schema used by the first client is sent to the second client in the system during on-going schema evolution, thus only a set of partial update operations modified for different schema versions is notified in the system, instead of notifying the whole/full data object modified for different schema versions. In addition, this is also achieved because schema evolution is performed on the update instruction, instead of the whole/full data object in the system.

In a first possible implementation form of the system according to the third aspect as such, the system further comprises a third client,
the server is further configured to transform the first update instruction into a third update instruction on the basis of catalog information, and notify the third update instruction to the third client, wherein the third update instruction indicates a set of partial update operations, which are associated to third data stored by the third client using a third schema; and
the third client is configured to apply the third update instruction to the stored third data, so that the third client, the second client and the first client can keep consistent data in the third schema, the second schema and the first schema respectively.

Thus, the system of the first implementation allows for more efficiency in terms of the performance and network usage consumption. In particular, in a real subscribe & notify scenario, thousands of clients subscribe to the same data object and the server has to notify the same change to all of them. The gain in network usage and bandwidth is directly proportional to the number of notifications.

In a second possible implementation form of the system according to the third aspect as such or the first implementation form thereof, the first update instruction includes:
- a client information for identifying the first client or schema version information which indicates the first schema used by the first client, and
- the set of partial update operations, which are associated to the first data using the first schema;
the second update instruction includes:
- a client information for identifying the second client or schema version information which indicates the second schema used by the second client, and
- the set of partial update operations, which are associated to the second data using the second schema;
the third update instruction includes:
- a client information for identifying the third client or schema version information which indicates the third schema used by the third client, and
- the set of partial update operations, which are associated to the third data using the third schema.

Thus, the system of the second implementation provides a flexible way of carrying information that indicates the schema used by the first (sending) or second or third (receiving) client directly or indirectly.

In a third possible implementation form of the system according to the third aspect as such or the first or second implementation form thereof, the catalog information comprises a plurality of schemas of one or more clients, and wherein the server is configured to:
- generate a transformation rule from the first schema to the second schema on the basis of the first schema and the second schema included in the catalog information;
- obtain the second update instruction by applying the generated transformation rule to the set of partial update operations indicated by the first update instruction.

Thus, the system of the third implementation provides a particularly efficient way of on-going schema evolution (i.e. transformation) from the first update instruction expressed in the first schema into the second update instruction expressed in the second schema, in particular, a particularly efficient way of on-going schema evolution (i.e. transformation) from a set of partial update operations, which are associated to data using the first schema in the first client into a set of partial update operations, which are associated to data using the second schema in the second client.

In a fourth possible implementation form of the system according to the third aspect as such or the first or second or third implementation form thereof, the server is further configured to:
- identify the first schema on the basis of the schema version information included in the first update instruction or on the basis of the client information included in the first update instruction and a mapping between the client information and the schema version.

Thus, the system of the fourth implementation provides a flexible way of identifying the schema used by the first (sending) client directly or indirectly.

A fourth aspect of the present invention provides a computer-readable storage medium storing program code, the program code comprising instructions for carrying out the method of the second aspect or one of the implementations of the second aspect.

### BRIEF DESCRIPTION OF THE DRAWINGS

The above aspects and implementation forms of the present invention will be explained in the following description of specific embodiments in relation to the enclosed drawings, in which:
Figure 1 shows a schematic diagram illustrating a database computing environment in which the embodiments of the invention are implemented;
Figure 2a shows a schematic diagram illustrating a system according to an embodiment of the present invention;
Figure 2b shows a schematic diagram illustrating a system according to another embodiment of the present invention;
Figure 3 shows a schematic diagram illustrating a system according to further embodiment of the present invention;
Figure 3a shows a table schematically illustrating the advantage of the system of Figure 3 according to an embodiment of the present invention;
Figure 3b shows another table schematically illustrating the advantage of the system of

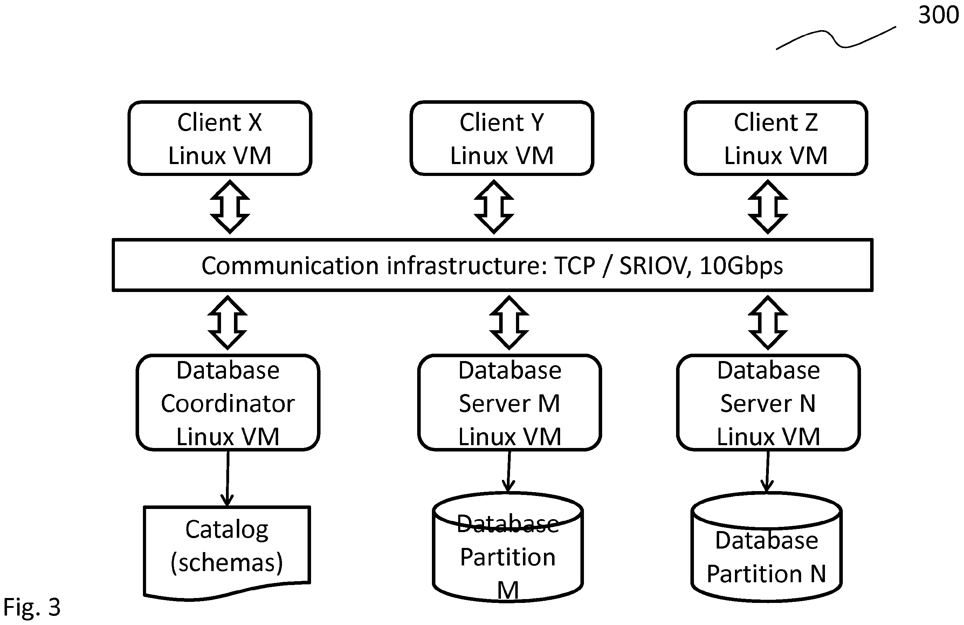

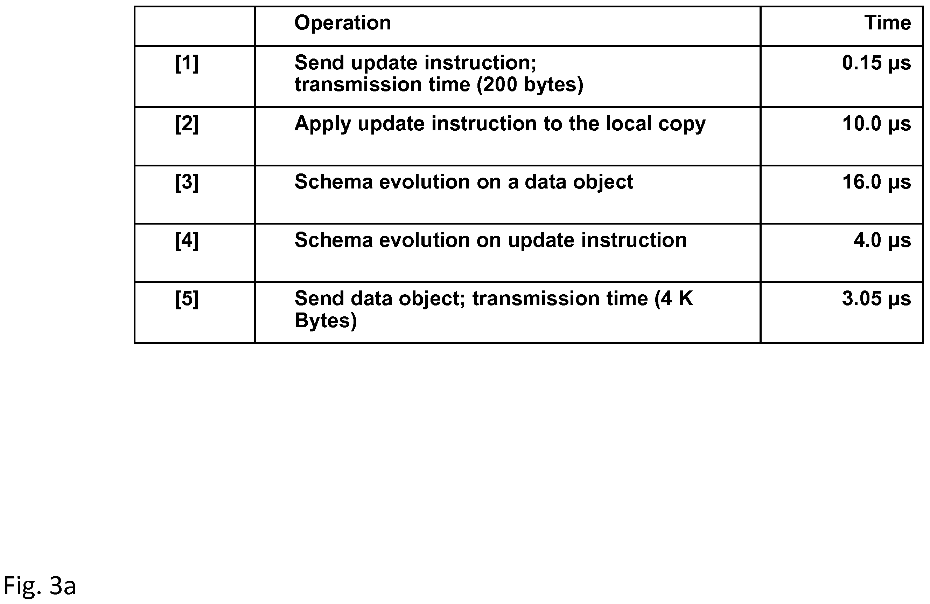

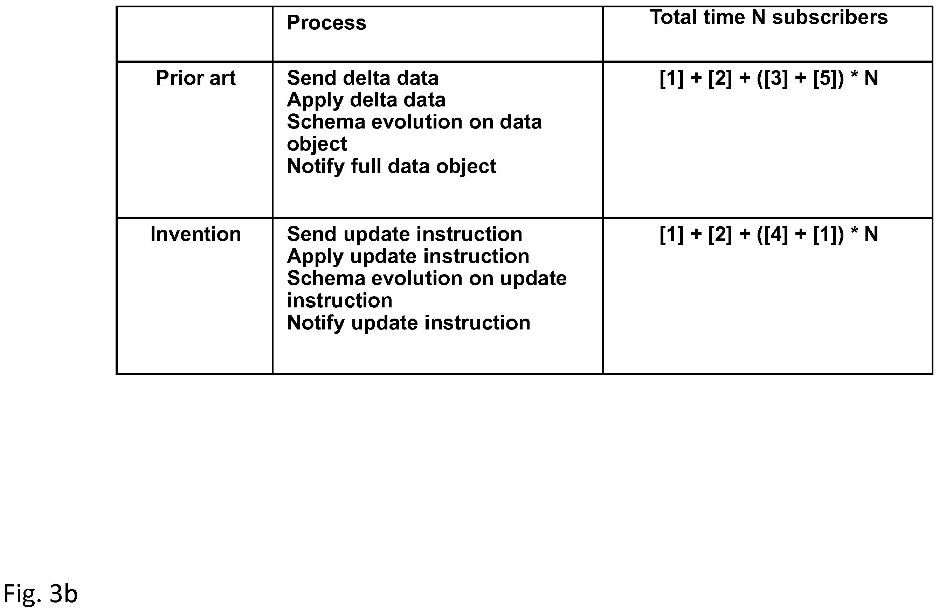

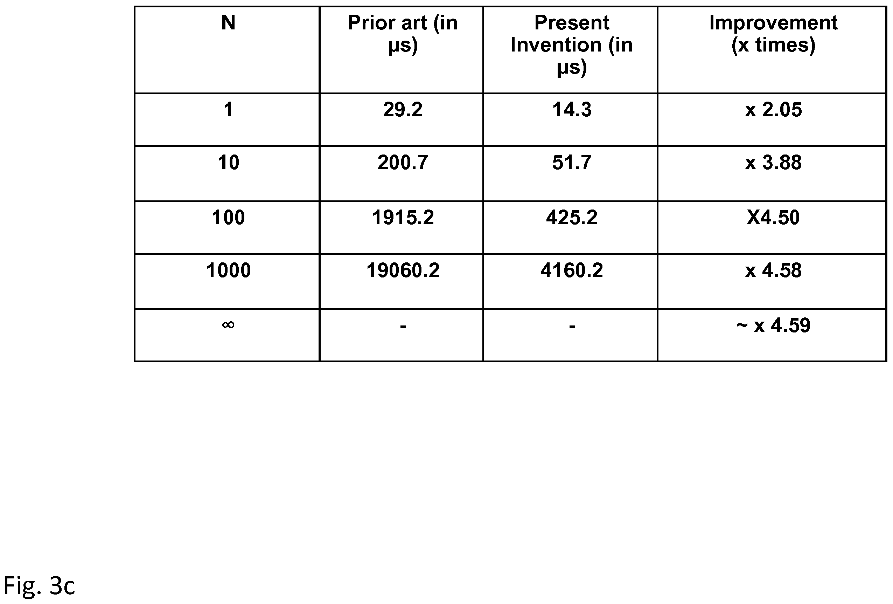

Figure 3 according to an embodiment of the present invention;
Figure 3c shows a further table schematically illustrating the advantage of the system of
Figure 3 according to an embodiment of the present invention;

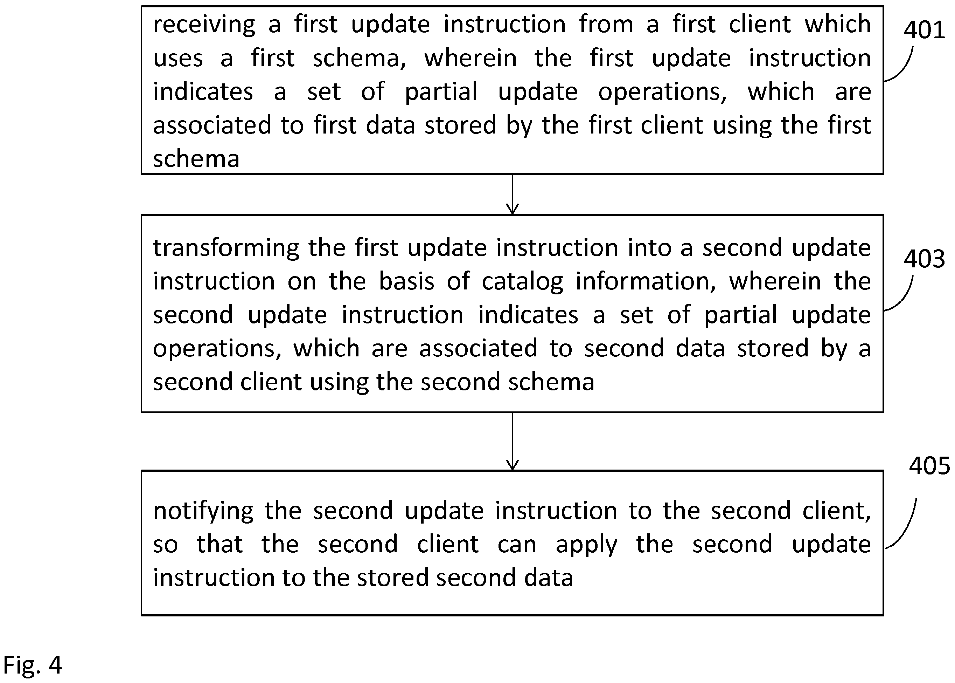

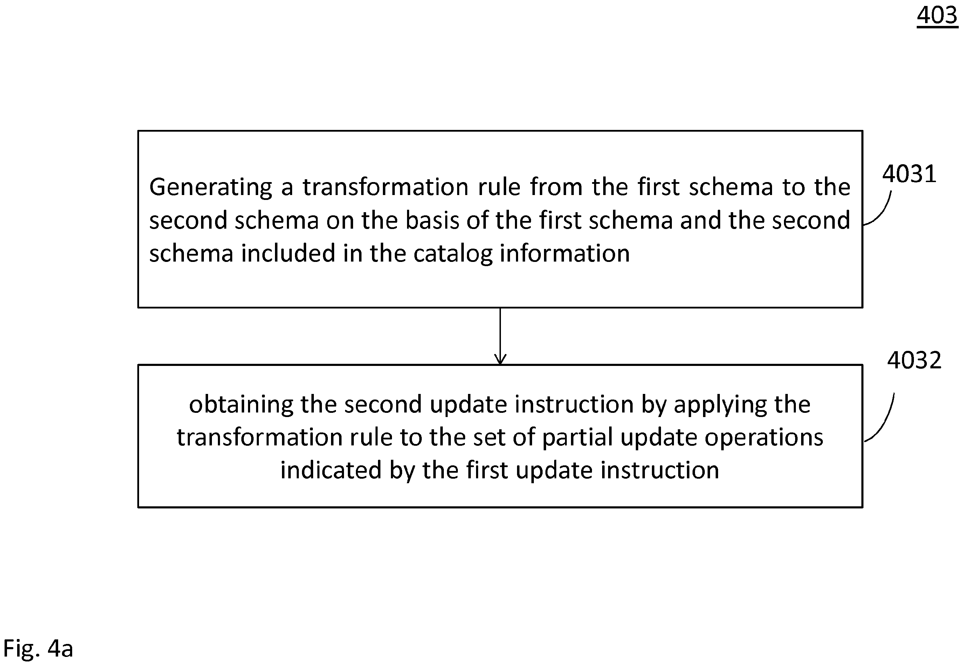

Figure 4 shows a schematic diagram illustrating a method according to an embodiment of the present invention;
Figure 4a shows a process of step 403 of Fig. 4 according to an embodiment of the present invention;

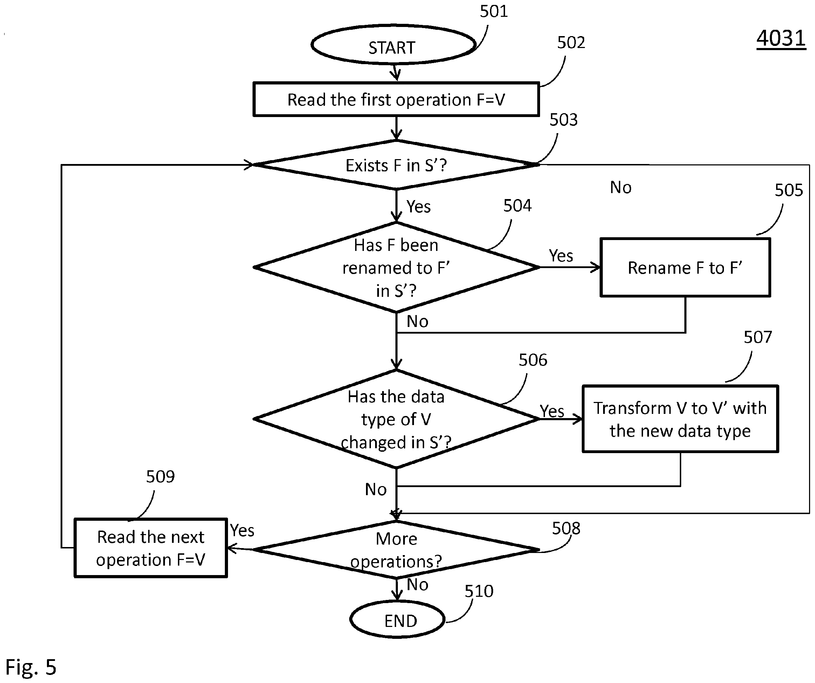

Figure 5 shows an example process of step 4031 of Fig. 4a according to an embodiment of the present invention;

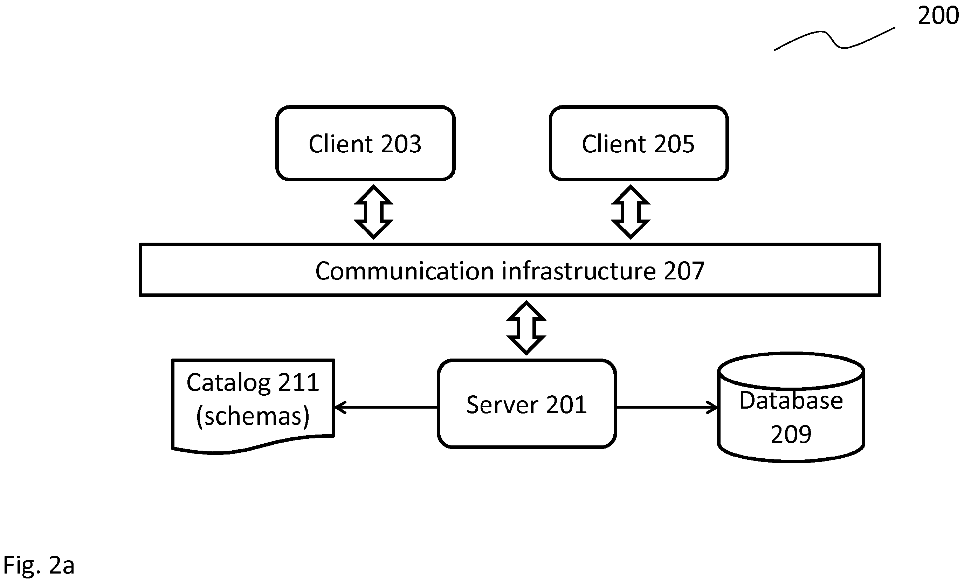

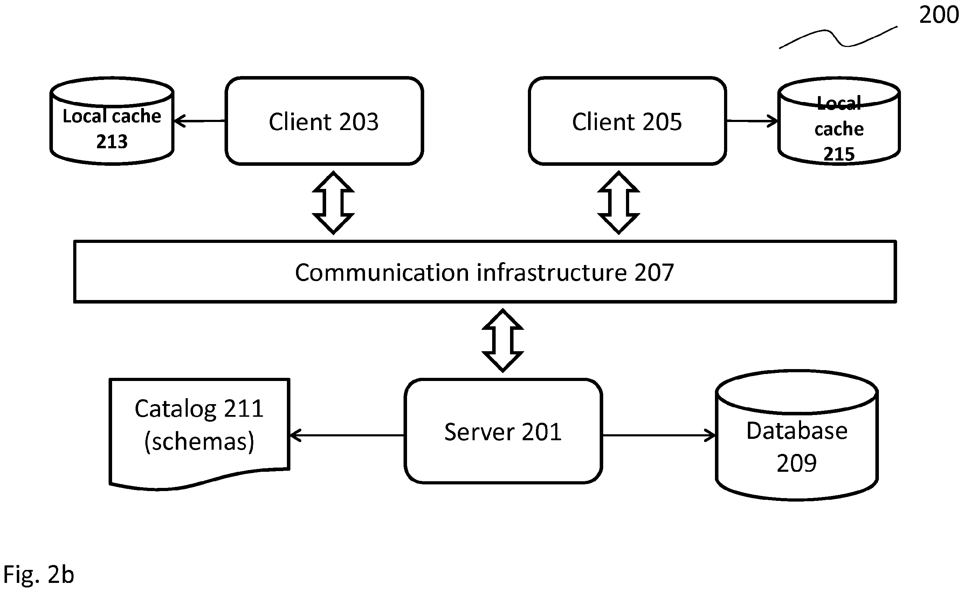

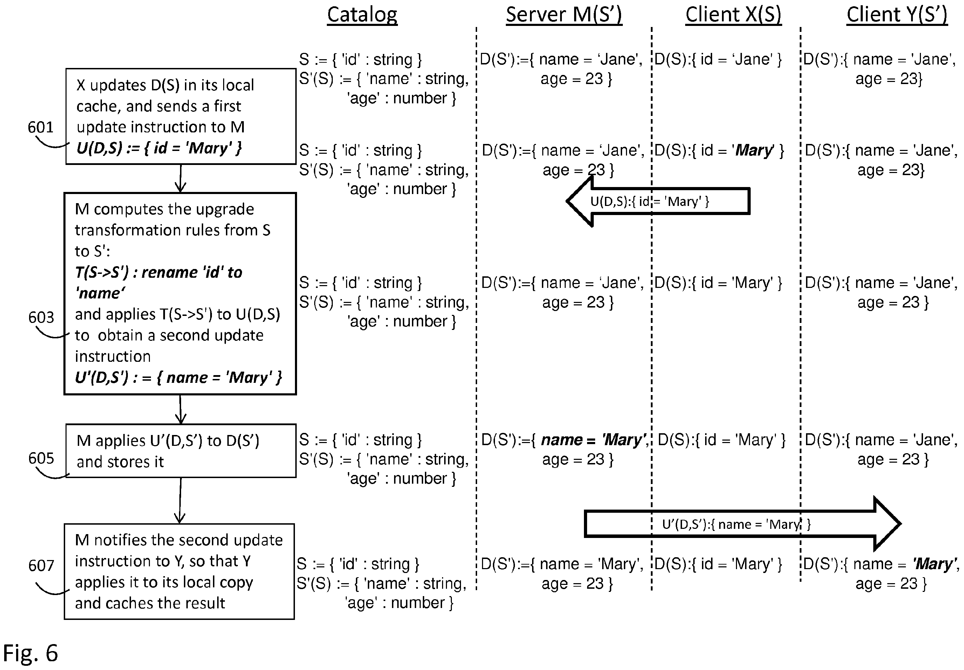

Figure 6 shows a schematic diagram illustrating a method performed by the system of FIG. 2a or FIG.2b according to an embodiment of the present invention;

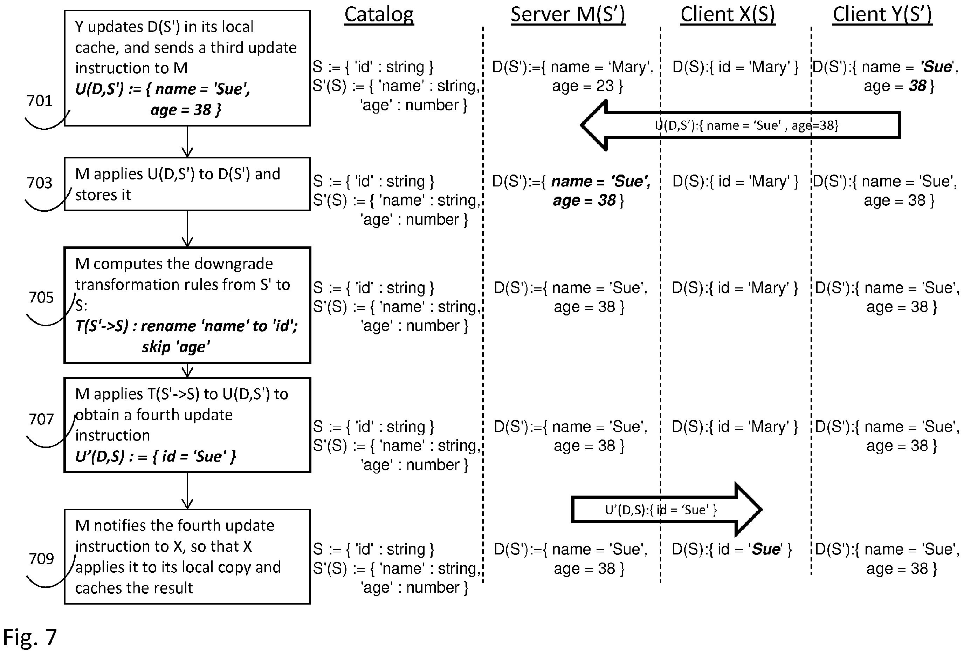

Figure 7 shows a schematic diagram illustrating a method performed by the system of FIG. 2a or FIG.2b according to another embodiment of the present invention;

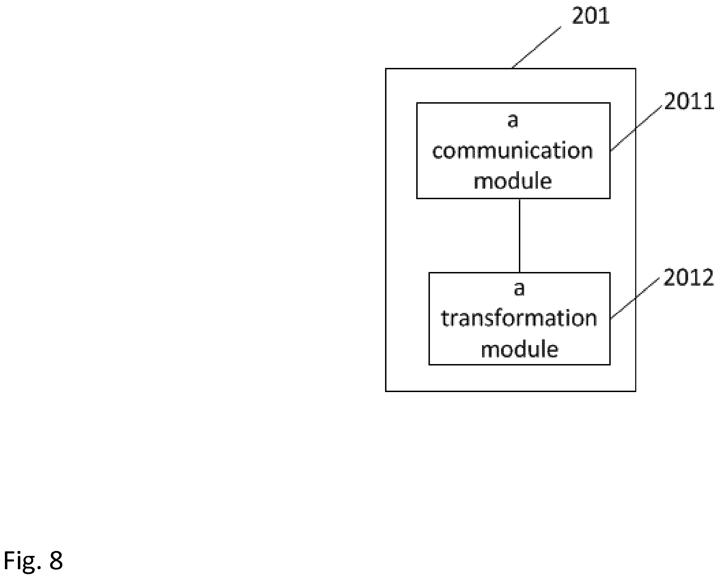

Figure 8 shows a schematic diagram illustrating a server according to an embodiment of the present invention;

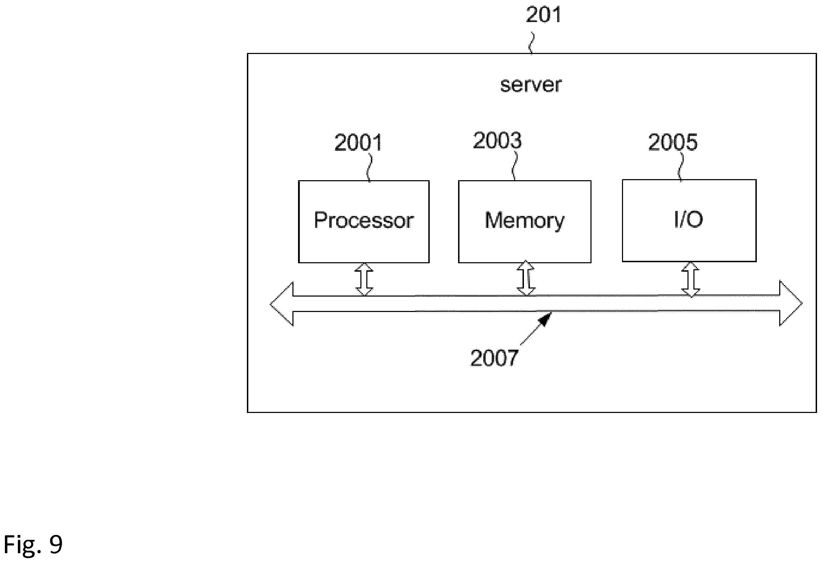

Figure 9 shows a schematic diagram illustrating a server according to another embodiment of the present invention.

In the various figures, identical reference signs will be used for identical or at least functionally equivalent features.

### DETAILED DESCRIPTION

A clear and full description is given below to the solutions according to embodiments of the present disclosure, with reference to the accompanying drawings.

In order to conveniently understand embodiments of the present invention, several terms that will be introduced in the description of the embodiments of the present invention are illustrated herein first.

As used herein, a database is an organized collection of data. In other words, the database stores collections of objects and allows read and write operations to the objects. In the database, objects can be of different object types.

As used herein, an object of a database (also referred to as a database object or data object, in short object) may be any defined object in a database that is used to store or reference data. It may be understood as a data item that is uniquely identified by a primary key. For example, a database object may be a table, a view, a sequence, an index, one or more fields of a record, one or more records, or one or more tables.

As used herein, a database schema (in short schema) may be used to describe one or more fields allowed for each object type. In other words, the schema is the structure of the database that defines the objects in the database. There may be a plurality of schema versions involved in a single database, or involved among a plurality of databases. The schema versions of the database(s) may include an initial schema version and subsequent schema versions, for example, S1, S2 (a newer schema based on S1), and S0 (an older schema based on S1). It is noted that schema version information may be information for differentiating between different schemas, while the schema itself may be information for describing one or more fields of a database object, for example, { 'name' : string, 'age' : number,... }.

As used herein, a catalog of a database may include metadata in which definitions of database objects are stored.

As used herein, a server (also referred to as a database server or publisher) is a computing device that provides database services to other computing devices (also referred to as clients, database clients or subscribers), as defined by the client-server model. Database management systems (DBMSs) provide database server functionality, and some DBMSs rely on the client-server model for database access. In an exemplary embodiment, the clients may comprise a plurality of standalone workstations, terminals, mobile devices or the like, or may comprise personal computers (PCs).

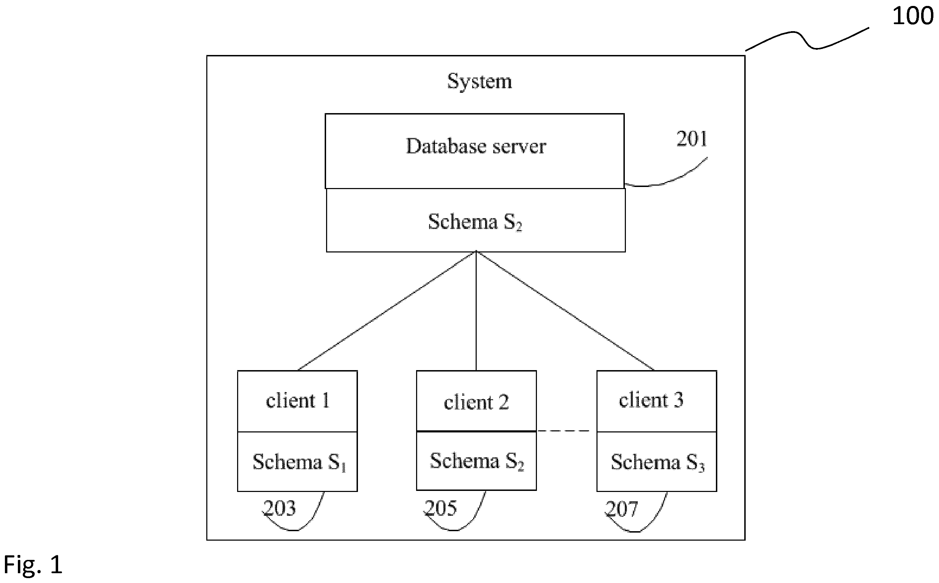

FIG. 1 illustrates a structure of a client/server database system 100 suitable for implementing the invention (specific modifications to the system 100 for implementing other embodiments are described in subsequent sections below). As shown in Fig.1, the system 100 comprises a database server 201, one or more clients 203, 205 and 207 connected to the database server 201. It can be understood that the present invention is also applicable to a cluster of multiple database servers that manage disjoint partitions of a database, or one or more database servers with replicas. The number or the topology of the database servers is not limited in the present invention.

The following description will present examples in which it will be assumed that there exist one or more server instances (e.g., database servers) in a cluster that communicate with one or more "clients" (e.g., personal computers or mobile devices). The embodiments of the present invention, however, are not limited to any particular environment or device configuration. Instead, embodiments may be implemented in any type of system architecture or processing environment capable of supporting the methodologies presented herein.

There are one or more schemas existing in the system 100, at any time. In particular, each client may run with (using) a different schema, for example, the first client 203 runs with a first schema S₁, the second client 205 runs with a second schema S₂, the third client 207 runs with a third schema S₃,... and the Nth client runs with a Nth schema Sₙ. At least some of the schemas S₁ to Sₙ may be different from each other. In one example and as shown in figure 1, the database server 201 may run with the second schema S₂. It is noted that in a real subscribe & notify scenario, the database server 201 may run with different schemas in different scenarios.

The first client 203 is configured to send a first update instruction to the server 201, wherein the first update instruction indicates a set of partial update operations. The partial update operations are associated to first data stored by the first client 203 using the first schema. Such first update instruction may be understood to be a program or a set of partial update operations and not the object or data within the object itself. Accordingly, the object or the (partial) data within the object, which have to be updated, are not exchanged between client and server.

The server 201 is configured to transform the received first update instruction defined in the first schema into a second update instruction defined in a second schema, in particular, on the basis of catalog information, and notify the second update instruction to the second client 205 which uses the second schema. The second update instruction indicates a set of partial update operations, the partial update operations are associated to second data stored by the second client 205 using the second schema. Such second update instruction may be understood to be a program or a set of partial update operations and not the object or data with the object itself. Accordingly, the object or the data within the object, which have to be updated, are not exchanged between client and server. The catalog information will be described in more detail further below.

The second client 205 is configured to apply the received second update instruction to the second data to be updated stored by the second client 205 using the second schema. In this manner the second client 205 and the first client 203 can keep consistent data in the second schema and the first schema respectively.

As an example, the second data to be updated may be a database object stored by the second client 205 using the second schema. The second client is configured update the database object by applying the received second update instruction to the stored database object to obtain an updated database object using the second schema.

The database object is associated to an object identifier, which may be a fixed value or sequence of values that identify uniquely one object with respect to the others.

The same procedure done for the second client 205 is also applied to the other clients, such as the third client 207, where the server 201 transforms the source update instruction (for example first update instruction) defined in the source schema (for example first schema) into a target update instruction (for example third update instruction) defined in a target schema (for example third schema) used by the target client (for example third client).

In any of the embodiments described above and in the following, the update instruction may include:
- a client information for identifying the corresponding client or schema version information which indicates the schema used by said client, and
- the set of partial update operations, which are associated to data stored by said client using the corresponding schema;

In such embodiments, the set of partial update operations may include any one or combination of the following: adding/removing/modifying the value of a field, adding/removing/renaming a field, changing a field type, changes on an attribute configuration, adding default values or any other update operation that modifies the data object.

In one example, the catalog information may include a plurality of schemas of one or more entities (i.e. clients and servers) of the system 100.

Alternatively, in another example, the catalog information may include a plurality of schemas and a list of clients with the respective schema versions they use. In other words, the catalog information may include a mapping between a plurality of client information (such as client IDs) and a plurality of schema versions.

It can be understood that information required by the database server may include at least one of the following:
the schema version obtained from the update instruction directly or indirectly, which indicates a source schema used by a source client. The source client may for instance be the first client, and the source schema may for instance be the first schema. The update instruction may for instance be the first (source) update instruction;
a set of partial update operations, the partial update operations are associated to data stored by the source client using said source schema. The data stored by the source client may for instance be the first data stored by the first client. The set of partial update operations is obtained from the update instruction;
the source schema of the source (sending) client and a target schema of a target (receiving) client, which are obtained from the catalog information;

In any of the embodiments described above and in the following, the server 201 is configured to generate a transformation rule from the first schema to the second schema on the basis of the first schema and the second schema included in the catalog information, and to obtain the second update instruction (defined in the second schema) by applying the generated transformation rule to the set of partial update operations indicated by the first update instruction (defined in the first schema). In an example, the server 201 may generate the transformation rule from the first schema to the second schema, then apply the transformation rule to modify the dependencies from the first schema to the second schema, and extract partial update operations for the second schema.

Generation of the transformation rule may be performed by using a rule based algorithm that creates a graph of dependencies between the partial update operations and the first schema.

In some embodiments, the server 201 is further configured to:
- identify the first (source) schema on the basis of the schema version information included in the first (source) update instruction or on the basis of the client information included in the first (source) update instruction and a mapping between the client information and the schema version.

In order to keep consistent copies of the same data objects, in one example, as shown in figure 1, when the current schema of a stored object of the server 201 is the second schema (i.e. when the server 201 uses the second schema), the server 201 is further configured to:
- update the stored object of the server using the second schema by applying the second update instruction to the stored object of the server to obtain an updated object; and
- store the updated object using the second schema in a database of the server 201. Alternatively, in another example, if the current schema of a stored object of the server 201 is the first schema, the server 201 is further configured to:
- update the stored object of the server using the first schema by applying the first update instruction to the stored object of the server to obtain an updated object; and
- store the updated object using the first schema in a database of the server. Alternatively, in another example, if the current schema of a stored object of the server is the third schema, the server 201 is further configured to:
- update the stored object of the server using the third schema by applying a third update instruction to the stored object of the server to obtain an updated object; and
- store the updated object using the third schema in a database of the server 201. Correspondingly, in such example, the server 201 is further configured to transform the first update instruction (defined in the first schema) into the third update instruction (defined in the third schema). The third update instruction indicates a set of partial update operations, the partial update operations being associated to third data stored by the third client 207 using the third schema.

It can be understood that in such embodiments, if the first schema is newer than the second schema, on-going downgrade schema evolution/transformation is performed in the system 100; if the first schema is older than the second schema, on-going upgrade schema evolution/transformation is performed in the system 100. It may show the on-going schema evolution mechanism according to the present invention where multiple clients or servers have copies of the same data with different schemas.

As can be seen from above, the system of the present invention is efficient in terms of the performance and network usage consumption. This is achieved because when dealing with notifications of partial updates, a target (second) update instruction corresponding to a target (second) schema different from the source (first) schema used by the source (first or sending) client is sent to the target (second or receiving) client in the system during on-going schema evolution, thus only a set of partial update operations modified for different schema versions is notified in the system, instead of notifying the whole/full data object modified for different schema versions. In addition, this is also achieved because schema evolution is performed on the update instruction, instead of the whole/full data object, by the server. Regarding with additional advantages, reference may be made to the aforementioned description in the summary part, which is not repeated herein.

FIG. 2a illustrates a database management system 200 according to an embodiment of the present invention. As shown in Fig.2a, the system 200 comprises a database server 201, a first client 203 and a second client 205 connected to the database server 201 via a communication network 207. The database server 201 is connected with a database 209, and can access to a catalog 211. The catalog 211 may contain a plurality of schemas of one or more entities (i.e. clients 203, 205 and the server 201) of the system 200.

There are one or more schema versions for each table existing in the database 209, at any time. Each object in the database 209 is associated to a given schema version. The clients 203, 205 have copies of the same data with different schemas. For example, the first client 203 with the same object in a first schema, and the second client 205 with the same object in a second schema. Each of the first and second clients 203, 205 has in its main memory a local cache that contains a copy of its most frequent accessed objects. Each object is updated in the cache after each read or write operation.

The first update instruction (also referred to as source update instruction) can be represented as a set of partial update operations or actions expressed in any schema version supported by a sending or source client 203 or 205, and sent to the server 201 as database operations by the sending or source client.

After performing schema evolution (i.e. transformation) on the first (source) update instruction, the second update instruction (also referred to as target update instruction) can be represented as a set of partial update operations or actions expressed in any schema version supported by a receiving or target client, and sent from the server 201 to the receiving or target client as notifications. In other words, notifications may be update instructions expressed in the schema version of the receiving or target client.

In one example, the above update instruction contains information for updating (or deleting) one or more fields (or sub-fields) of a data object. Further implementation of the above update instruction will be described in more detail below.

For other implementation details of the system 200, reference may be made to the above embodiments, which are not repeated herein.

As can be seen from above, the system 200 of the present invention has the following advantages:
1. The size of notification is only the size of the update instruction, while in the prior solutions it was the size of the whole updated data object, which was transmitted from the source client to the server and then to the target client.
   This reduction on the size reduces significantly the data sent over the network, thereby allowing for a much better usage of the available bandwidth. For large objects, latency is also reduced. It also reduces the risk of network bottlenecks.
   In a real subscribe & notify scenario, thousands of clients subscribe to the same data object and the server has to notify (broadcast) the same change to all of them. The gain in communication usage and bandwidth is directly proportional to the number of notifications.
2. The processing time is smaller because schema evolution is performed on the update instruction, instead of the whole/full updated data object, by the server. The server can process more operations per second.
3. The combination of the two previous benefits (less data communication and faster processing) result in a better server throughput and network usage.

FIG. 2b illustrates a database management system 200 according to another embodiment of the present invention. As shown in Fig.2b, the difference between the system of Fig.2b and the system of Fig.2a lies in: each client 203, 205 is connected to a local cache 213, 215 that contains a copy of its accessed objects, in particular, a copy of its most frequent accessed objects.

For other detailed implementation details of the system 200, reference may be made to the above embodiments, which are not repeated herein.

Figure 3 shows a possible deployment for a subscription and notification scenario. Such scenario has been simulated in virtualized Linux clients and servers (3.0 GHz CPUs) are connected through a 10Gbps network and SRIOV. As shown in fig.3, the database server M manages a partition M of the database, and the database server N manages a partition N of the database.

As shown in figure 3a, the table contains the time of each single operation. Times and sizes are averaged, and the size of the protocol and transport headers are already included into the size of the transmission packets for the update instruction (which corresponds to the above first or second update instruction) (200 bytes) and for full data objects (4 Kbytes).

As shown in figure 3b, the table details the update process for the prior art and for the present invention, and expresses it with a formula as a combination of the times in the previous table as shown in figure 3a.

As shown in figure 3c, the table computes the estimated time for different number of subscribers. Due to the improvements in single updates and data transmission, the throughput increases two times for a single subscriber, and up to more than 4.5 times for more than 1 K subscribers.

Fig. 4 shows a data update notification method according to an embodiment of the present invention. The method can be performed by a server shown in figures 1, 2a, 2b and 3. As shown in FIG. 4, the following steps may be included:
S401: receiving a first update instruction from a first client which uses a first schema, wherein the first update instruction indicates a set of partial update operations, the partial update operations are associated to first data stored by the first client using the first schema;
S403: transforming the first update instruction (defined in the first schema) into a second update instruction (defined in a second schema) on the basis of catalog information, wherein the second update instruction indicates a set of partial update operations, the partial update operations are associated to second data stored by a second client using the second schema; and
S405: notifying the second update instruction to the second client, so that the second client can apply the second update instruction to the stored second data. As an example, the second data may include a to-be-updated object stored by the second client using the second schema. In particular, the second client may update the to-be-updated object by applying the second update instruction to the to-be-updated object to obtain an updated object.

In any of the embodiments described above and in the following, the update instruction includes:
- a client information for identifying the corresponding client or schema version information which indicates the schema used by said client, and
- the set of partial update operations, which are associated to data stored by said client using the schema.

In some embodiments of the present invention, as shown in figure 4a, S403 may include: S4031: generating a transformation rule from the first schema to the second schema on the basis of the first schema and the second schema included in the catalog information; and
It is noted that the transformation rule can be computed using a rule based algorithm that considers predicates such as adding a field, removing a field, changing a field type, changes on the configuration of a file, adding default values and so on;
S4032: obtaining the second update instruction (defined in the second schema) by applying the generated transformation rule to the set of partial update operations indicated by the first update instruction.

In some embodiments, the method may further includes:
- identifying the first schema on the basis of the schema version information included in the first update instruction or on the basis of the client information included in the first update instruction and a mapping between the client information and the schema version.

As one example, the method may further includes:
- updating a stored object of the server by applying the first update instruction to the stored object of the server to obtain an updated object, if the current schema of the stored object of the server is the first schema; and
- storing the updated object using the first schema in a database of the server.

Thus, the method of the embodiment provides a particularly efficient way of keeping consistent copies of the same data objects when the server uses the first schema.

Alternatively, as another example, the method may further includes:
- updating a stored object of the server by applying the second update instruction to the stored object of the server to obtain an updated object, if the current schema of the stored object of the server is the second schema; and
- storing the updated object using the second schema in a database of the server. Thus, the method of the embodiment provides a particularly efficient way of keeping consistent copies of the same data objects when the server uses the second schema.

Alternatively, as another example, the method may further includes:
- updating a stored object of the server by applying a third update instruction to the stored object of the server to obtain an updated object, if the current schema of the stored object of the server is the third schema; and
- storing the updated object using the third schema in a database of the server; Correspondingly, the method further comprises: transforming the first update instruction (defined in the first schema) into the third update instruction (defined in the third schema). The third update instruction indicates a set of partial update operations, the partial update operations being associated to third data stored by a third client using the third schema.

Thus, the method of the embodiment provides a particularly efficient way of keeping consistent copies of the same data objects when the server uses the third schema.

Fig. 5 shows a process for generating a transformation rule from schema S to schema S' according to an exemplary embodiment of the present invention. The method can be performed by a server shown in figures 1, 2a, 2b and 3. It shows a procedure to perform schema evolution(transformation) from schema S to S' on an (source) update instruction represented as a sequence of a field F changes to V, i.e. modifying a value of the field F to be V.

The steps of the method of flowchart 500 are not limited to the order described below, and the various steps may be performed in a different order. Further, two or more steps of the method of flowchart 500 may be performed simultaneously with each other.

The method of Fig. 5 begins at step 501, and transitions to step 502, where among a set of operations or actions of partial update expressed in the schema S, the first action F=V is read.

After step 502, the flowchart 500 transitions to step 503, where it is determined whether a field F exists in the schema S'. The catalog may comprise a plurality of schemas, where the schema describes the fields allowed for each object type of each schema version. If the field F does not exist in the schema S' (NO at step 503), the flowchart 500 transitions to step 508, where it is further determined whether more actions is waiting for proceed.

If the field F exists in the schema S' (YES at step 503), the flowchart 500 transitions to step 504, where it is further determined whether the field F has been renamed to a field F' in the schema S'. In this example, the server determines whether the field F has been renamed to a field F' in the schema S' on the basis of the schema S and schema S' obtained from the catalog.

If the field F has been renamed to a field F' in the schema S'(YES at step 504), the flowchart 500 transitions to step 505, where a part of a transformation rule, i.e. "rename the field F to F' " is obtained. If the field F has not been renamed to a field F' in the schema S' (NO at step 504), the flowchart 500 transitions to step 506, where it is further determined whether the data type of V has changed in the schema S' or not. In one example, the server determines whether the data type of V has changed in the schema S' by comparing the data type of the field between the two schemas S and S' while taking the position of the field into consideration.

If the data type of V has changed in the schema S' (YES at step 506), the flowchart 500 transitions to step 507, where another part of the transformation rule, i.e. "transform V to V' with the new data type" is obtained. If the data type of V has not changed in the schema S' (NO at step 506), the flowchart 500 transitions to step 508, where it is further determined whether more actions are waiting.

If more actions are waiting (YES at step 508), the flowchart 500 transitions to step 509, where among a set of operations or actions of partial update expressed in the schema S, the next action F=V is read. If no more action is waiting for proceed (NO at step 508), the flowchart 500 transitions to step 510, where the flowchart 500 ends.

After step 509, the flowchart 500 may return to step 503 to perform another sub process.

As can be seen from above, the transformation rule from schema S to S' including "renaming the field F to F' "and "transforming the value V to V' with the new data type" can be generated, thus a target update instruction defined in the schema S', i.e. modifying the value of the field F' to be V' can be obtained by applying said transformation rule to the source update instruction defined in the schema S, i.e. modifying the value of the field F to be V.

Figure 6 shows an on-going schema upgrade evolution method performed by the system of FIG. 2a or FIG.2b according to an embodiment of the present invention. It shows in detail the procedure of the upgrade of a first update instruction from an old schema S to a newer schema S'. Initially there are two schema versions S and S' in the catalog of the database server M (in short server M), one object D stored in the server M, and the same object D cached in clients X and Y with different schema versions. As shown in FIG. 6, the following steps may be included:
S601, the client X modifies D(S) in its local cache and sends a first update instruction U(D,S) to the server M.

It is noted that U may indicate directly or indirectly a set of partial update operations (a program, a set of instructions) that can be understood in the schema S but does not include the data object. For example, "U (D, S) := {id = 'Mary'}" may be a program that tells to the database server to search for object D with schema S and to modify the value of the 'id' field to 'Mary'.

S603, the server M transforms U(D,S) to U'(D,S'). In particular, the server M generates upgrade transformation rules from S to S': T(S->S'). The upgrade transformation rules may include renaming 'id' to 'name'. Further the server M applies T(S->S') to U(D,S) to obtain a second update instruction U'(D,S') : = { name = 'Mary'}.

It is noted that U' may indicate directly or indirectly a set of partial update operations (a program, a set of instructions) that can be understood in the schema S' but does not include the data object. For example, "U'(D, S') :={ name = 'Mary'}" may be a new program that tells to the database server or a receiving client (subscriber) to search for object D with schema S' and to modify the value of the 'name' field to 'Mary'.

Thus the server M allows for transforming a program (i.e. first update instruction) into a new program (i.e. second update instruction) that can be understood in the new schema in an efficient way, i.e. without reading the data object.

S605, the server M applies the second (target) update instruction U' to D(S') and stores the result. The current schema version in the server M is S'.

S607, the server M notifies the second (target) update instruction U' to the client Y which uses the schema S', so that the client Y applies U' (D, S') into its cached version of D(S') and stores the result.

Figure 7 shows an on-going schema downgrade evolution method performed by the system of FIG. 2a or FIG.2b according to an embodiment of the present invention. It shows in detail the procedure of the downgrade of a third update instruction from a newer schema S' to an old schema S. Initially there are two schema versions S and S' in the catalog of the database server M (in short server M), one object D stored in the server M, and the same object D cached in clients X and Y with different schema versions. As shown in FIG. 7, the following steps may be included:
S701, the client Y, which has objects in a newer schema version S', modifies D(S') and sends the third update instruction U (D, S') to the server M;
It is noted that U may indicate directly or indirectly a set of partial update operations (a program, a set of instructions) that can be understood in the schema S' but does not include the data object. For example, "U (D, S'):= {name = 'Sue', age=38}" may be a program that tells to the database server to search for object D with schema S', and to modify the value of the 'name' field to 'Sue' and to modify the value of the 'age' field to '38"'.

S703, considering the object is already stored with schema S' in the server M, the server M applies the third update instruction directly to the object and stores it. The current schema version in the server M is S'.

S705 and S707, the server M transforms U (D,S') to U'(D,S). In particular, the server M generates downgrade transformation rules from S' to S: T(S'->S). The downgrade transformation rules may include renaming 'name' to 'id' and skipping 'age'(in S705). Further the server M applies T(S'->S) to U (D, S') to obtain a fourth update instruction U' (D, S): = {id = 'Sue'} (in S707).

It is noted that U' may indicate directly or indirectly a set of partial update operations (a program, a set of instructions) that can be understood in the schema S but does not include the data object. For example, "U'(D, S): = {id = 'Sue'}" may be a new program that tells to the database server or a receiving client (subscriber) to search for object D with schema S and to modify the value of the 'id' field to 'Sue"'.

S709, the server M notifies the fourth (target) update instruction U'(D,S) to the client X, so that the client X applies it to its local copy and caches the result.

As can be seen from figures 6 and 7, in the system, the clients X and Y can read and update the same data objects with different schema versions. All clients and the server keep consistent copies of the same data objects in different schema versions.

As can be seen from figures 6 and 7, these examples describe the scenario where an object is always updated in the server to the schema version S'. The present invention also supports different scenarios where the object may be updated in the server to the schema version that the client X or Y uses.

Figure 8 shows a server 201 according to an embodiment of the present invention. The server 201 may be a computing node in a computing system. The server 201 can be used in various scenarios as shown in figure 1, 2a, 2b or 3.

As shown in FIG. 8, the server 201 may include:
- a communication module 2011, configured to receive a first update instruction from a first client which uses a first schema, wherein the first update instruction indicates a set of partial update operations, the partial update operations are associated to first data stored by the first client using the first schema;
- a transformation module 2012, configured to transform the first update instruction (defined in the first schema) into a second update instruction (defined in a second schema) on the basis of catalog information, wherein the second update instruction indicates a set of partial update operations, the partial update operations are associated to second data stored by a second client using the second schema; and
- wherein the communication module 2011 is further configured to notify the second update instruction to the second client, so that the second client can apply the second update instruction to the stored second data.

In any of the embodiments described above and in the following, the update instruction may comprise:
- a client information for identifying the corresponding client or schema version information which indicates the schema used by said client, and
- the set of partial update operations, which are associated to data stored by said client using the corresponding schema.

In some embodiments of the present invention, the catalog information comprises a plurality of schemas of one or more clients, and the transformation module 2011 is configured to:
- generate a transformation rule from the first schema to the second schema on the basis of the first schema and the second schema included in the catalog information; and
- obtain the second update instruction (defined in the second schema) by applying the generated transformation rule to the set of partial update operations indicated by the first update instruction.

In some embodiments of the present invention, the transformation module 2012 is further configured to:
- identify the first schema on the basis of the schema version information included in the first update instruction or on the basis of the client information included in the first update instruction and a mapping between the client information and the schema version.

Furthermore, as one example, the server 201 may include a local management module (not illustrated in figure 8), configured to:
- update a stored object of the server by applying the first update instruction to the stored object of the server to obtain an updated object, if the current schema of the stored object of the server is the first schema; and
- store the updated object using the first schema in a database of the server.

Alternatively, as another example, the server 201 may include a local management module, configured to:
- update a stored object of the server by applying the second update instruction to the stored object of the server to obtain an updated object, if the current schema of the stored object of the server is the second schema; and
- store the updated object using the second schema in a database of the server.

Alternatively, as another example, the server 201 may include a local management module, configured to:
- update a stored object of the server by applying a third update instruction to the stored object of the server to obtain an updated object, if the current schema of the stored object of the server is the third schema; and
- store the updated object using the third schema in a database of the server;

Correspondingly, in one example, the transformation module 2012 is further configured to transform the first update instruction (defined in the first schema) into the third update instruction (defined in the third schema).The third update instruction indicates a set of partial update operations, the partial update operations being associated to third data stored by a third client using the third schema.

For other detailed implementation details and advantages, reference may be made to the above embodiments.

As can be seen from above, the server of the present invention is efficient in terms of the performance and network usage consumption. This is achieved because when dealing with notifications of partial updates, a second update instruction corresponding to a second schema different from the first schema used by the first client is sent to the second client during on-going schema evolution, thus only a set of partial update operations modified for different schema versions is notified by the server, instead of notifying the whole/full data object modified for different schema versions. In addition, this is also achieved because schema evolution is performed on the update instruction, instead of the whole/full updated data object, by the server. Regarding with additional advantages, reference may be made to the aforementioned description in the summary part, which is not repeated herein.

Fig. 9 shows a server 201 according to another embodiment of the present invention. The server 201 may include: a processor 2001 and a memory 2003. Optionally, the server 201 may further include an input/output (I/O) device 2005 and a communication bus 2007. The server 201 also can be used in various scenarios as shown in figure 1, 2a, 2b or 3.

The processor 2001 may be a central processing unit (CPU), a graphics processing unit (GPU) or an application-specific integrated circuit (ASIC), or be configured as one or more integrated circuits implementing this embodiment of the present invention.

The memory 2003 may include one or more levels of cache. The memory 2003 has stored therein control logic (i.e., computer software) and/or data.

The processor 2001 is configured to, by reading instructions stored by the memory 2003:
- receive a first update instruction from a first client which uses a first schema, wherein the first update instruction indicates a set of partial update operations, the partial update operations are associated to first data stored by the first client using the first schema;
- transform the first update instruction (defined in the first schema) into a second update instruction (defined in a second schema) on the basis of catalog information, wherein the second update instruction indicates a set of partial update operations, the partial update operations are associated to second data stored by a second client using the second schema; and
- notify the second update instruction to the second client, so that the second client can apply the second update instruction to the stored second data.

For other detailed implementation details and advantages, reference may be made to the above embodiments. In an implementation, the communication module 2011 and the transformation module 2012 illustrated in figure 8 may be implemented as the processor 2001 and the memory 2003 illustrated in figure 9.

The present invention has been described in conjunction with various embodiments herein. However, other variations to the disclosed embodiments can be understood and effected by those skilled in the art in practicing the claimed present invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

## Claims

1. A server (201) for use in a database management system (200), comprising:
- a communication module (2011), configured to receive a first update instruction from a first client (203) which uses a first schema, wherein the first update instruction indicates a set of partial update operations, the partial update operations being associated to first data stored by the first client (203) using the first schema;
- a transformation module (2012), configured to transform the first update instruction into a second update instruction on the basis of catalog information (211), wherein the second update instruction indicates a set of partial update operations, the partial update operations being associated to second data stored by a second client (205) using a second schema; and
- wherein the communication module (2011) is further configured to notify the second update instruction to the second client (205), so that the second client (205) can apply the second update instruction to the stored second data.

2. The server according to claim 1,
wherein the first update instruction comprises:
- a client information for identifying the first client (203) or schema version information which indicates the first schema used by the first client (203), and
- the set of partial update operations, which are associated to the first data using the first schema;
wherein the second update instruction comprises:
- a client information for identifying the second client (205) or schema version information which indicates the second schema used by the second client (205), and
- the set of partial update operations, which are associated to the second data using the second schema.

3. The server according to claim 1 or 2, wherein the catalog information (211) comprises a plurality of schemas of one or more clients (203, 205, 207), and wherein the transformation module (2012) is configured to:
- generate (4031, 603, 705) a transformation rule from the first schema to the second schema on the basis of the first schema and the second schema included in the catalog information (211); and
- obtain (4032, 603, 707) the second update instruction by applying the generated transformation rule to the set of partial update operations indicated by the first update instruction.

4. The server according to claim 2 or 3, wherein the transformation module (2012) is further configured to:
- identify the first schema on the basis of the schema version information included in the first update instruction or on the basis of the client information included in the first update instruction and a mapping between the client information and the schema version.

5. A data update notification method for notifying updates in a database management system (200), the method performed by a server (201) comprising:
- receiving (401) a first update instruction from a first client (203) which uses a first schema, wherein the first update instruction indicates a set of partial update operations, the partial update operations being associated to first data stored by the first client (203) using the first schema;
- transforming (403) the first update instruction into a second update instruction on the basis of catalog information (211), wherein the second update instruction indicates a set of partial update operations, the partial update operations being associated to second data stored by a second client (205) using a second schema; and
- notifying (405, 607, 709) the second update instruction to the second client (205), so that the second client (205) can apply the second update instruction to the stored second data.

6. The method according to claim 5, wherein the first update instruction includes:
- a client information for identifying the first client (203) or schema version information which indicates the first schema used by the first client (203), and
- the set of partial update operations, which are associated to the first data using the first schema;
wherein the second update instruction includes:
- a client information for identifying the second client (205) or schema version information which indicates the second schema used by the second client (205), and
- the set of partial update operations, which are associated to the second data using the second schema.

7. The method according to claim 5 or 6, wherein the step of transforming (403) the first update instruction into a second update instruction on the basis of catalog information (211) comprises:
- generating (4031, 603, 705) a transformation rule from the first schema to the second schema on the basis of the first schema and the second schema included in the catalog information;
- obtaining (4032, 603, 707) the second update instruction by applying the generated transformation rule to the set of partial update operations indicated by the first update instruction.

8. A database management system (200), comprising a first client (203), a second client (205) and a server (201), wherein:
the first client (203) is configured to send (601, 701) a first update instruction to the server (201), wherein the first update instruction indicates a set of partial update operations, which are associated to first data stored by the first client (203) using the first schema;
the server (201) is configured to transform the received first update instruction into a second update instruction on the basis of catalog information (211), and notify (607, 709) the second update instruction to the second client (205), wherein the second update instruction indicates a set of partial update operations, which are associated to second data stored by the second client (205) using a second schema; and
the second client (205) is configured to apply the second update instruction to the stored second data.

9. The system (200) according to claim 8,
wherein the first update instruction includes:
- a client information for identifying the first client (203) or schema version information which indicates the first schema used by the first client (203), and
- the set of partial update operations, which are associated to the first data using the first schema;
wherein the second update instruction includes:
- a client information for identifying the second client (205) or schema version information which indicates the second schema used by the second client (205), and
- the set of partial update operations, which are associated to the second data using the second schema.

10. The system (200) according to claim 8 or 9, wherein the catalog information (211) comprises a plurality of schemas of one or more clients (203, 205, 207), and wherein the server (201) is configured to:
- generate (4031, 603, 705) a transformation rule from the first schema to the second schema on the basis of the first schema and the second schema included in the catalog information (211);
- obtain (4032, 603, 707) the second update instruction by applying the generated transformation rule to the set of partial update operations indicated by the first update instruction.

11. A computer program comprising program code for performing the method of any one of claims 5 to 7 when executed on a computer.
